# EUROPEAN PATENT SPECIFICATION

(11) **EP 0 689 952 B1**
(45) Date of publication and mention of the grant of the patent: **29.07.1998**
(21) Application number: 95303086.3
(22) Date of filing: 05.05.1995
(51) Int. Cl.: B60J 10/00, B60J 10/08, B60R 13/06

(54) **Flexible sealing and trimming strips**
Flexibele Dichtung und Randleiste
Joint flexible et bande profilée

(30) Priority: 01.07.1994 GB 9413309
(43) Date of publication of application: 03.01.1996
(73) Proprietor: DRAFTEX INDUSTRIES LIMITED, Edinburgh EH2 3AP, Scotland (GB)
(72) Inventor: Robinault, Michel, F-44000 Nantes (FR)
(74) Representative: Foster, David Martyn

(56) References cited:
- DE-A- 4 236 817
- DE-C- 3 818 605
- FR-A- 2 141 329
- FR-A- 2 593 445
- GB-A- 630 062
- GB-A- 934 249
- US-A- 3 505 772
- US-A- 5 178 927

## Description

The invention relates to a sealing arrangement for sealing around the periphery of an opening closable by a closure member, comprising a linearly extending support strip which provides first and second oppositely directed faces, locking means on the support strip for co-operating with matching engaging means on the periphery of the opening for securing the support strip to the periphery of the opening with the first face of the strip directed towards the periphery of the opening, and the soft sealing profile mounted on the second face of the support strip so as to be partially compressed by the closing closure member when the support strip is secured to the periphery of the opening.

One form of such a sealing arrangement is known from GB-A-934 249. In the known arrangement, however, the support strip is formed from a resilient material. Such a support strip, when carrying the required sealing profile, is difficult to assemble onto the periphery of an opening. The invention aims to deal with this problem.

The sealing arrangement in accordance with the present invention is characterised in accordance with the invention in that the support strip is of predetermined and substantially invariable length which matches a predetermined length along the periphery of the opening and is substantially rigid to enable fitting of the sealing arrangement in a single operation.

Flexible sealing arrangements embodying the invention will now be described, by way of example only, with refeence to the accompanying diagrammatic drawings in which:
Figure 1 is a side view of part of a motor vehicle body showing a door opening to be sealed by one of the sealing strips;
Figure 2 is a cross-section through one of the sealing arrangements, showing it mounted on the vehicle body of Figure 1;
Figure 3 shows the sealing arrangement of Figure 2 but partially compressed by the closing door; and
Figure 4 shows another one of the sealing arrangements.

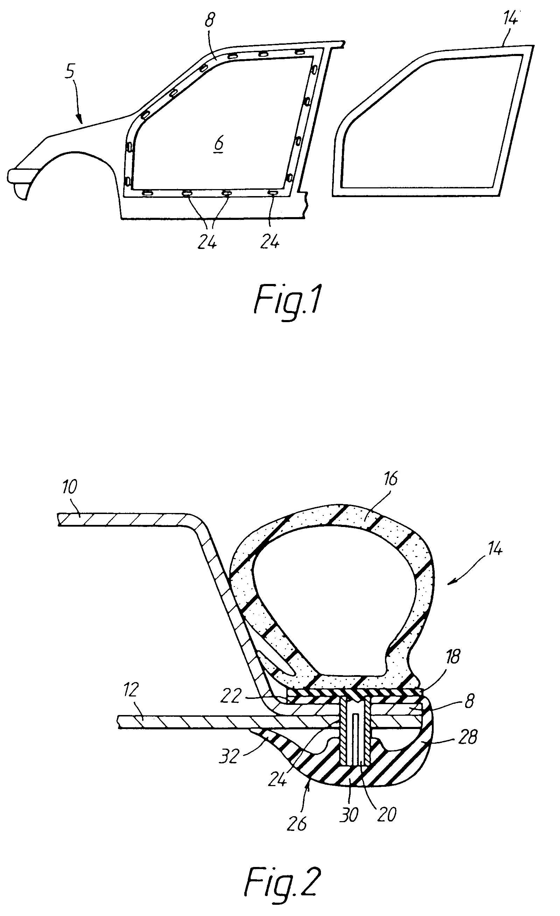

As shown in Figure 1, a motor vehicle body 5 has a door opening 6, the door not being shown. The bodywork around the door opening defines a flange 8 (to be described in more detail below) where the inner and outer skins of the bodywork meet and are welded together. The sealing arrangements to be described in more detail below are mounted on the flange 8 so as to run around the door opening and to present a soft sealing profile which is partially compressed by the closing door so as to provide a weather-proof seal. One such sealing arrangement is shown diagrammatically at 14 in Figure 1, ready to be fitted to the vehicle body in a manner to be described.

Figure 2 shows the flange 8 surrounding the door opening 6 of Figure 1 and formed where the adjacent body panels 10 and 12 come together at the door opening and are welded to each other.

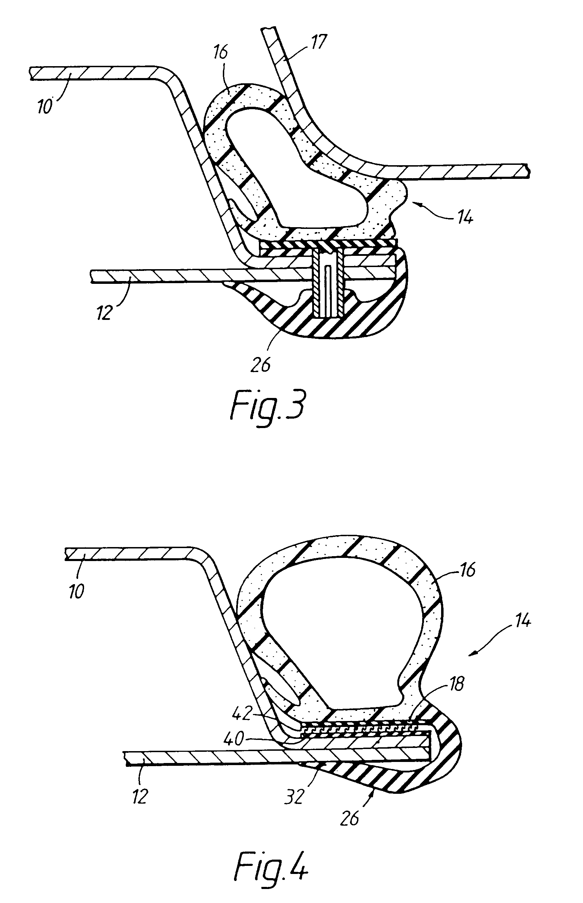

The sealing arrangement is shown generally at 14 and is mounted on the flange 8 in a manner to be described in more detail. The sealing arrangement 14 has a tubular sealing profile 16 which is advantageously made by extrusion from sponge rubber or similar material. In a manner to be explained, it is supported so as to be attached to the flange 8 and to extend around the whole of the door opening. The sealing arrangement supports the sealing profile 16 so that it is presented towards the outside of the opening and so as to be partially compressed by the closing door 17 as shown diagrammatically in Figure 3. The partially compressed sealing profile 16 thus provides a weather-proof seal running around the door opening.

As shown in Figure 2, the sealing strip 14 includes a substantially rigid support strip 18 of thin rectangular cross-section which is advantageously produced by moulding from compact hard rubber or plastics material. The support strip 18 carries clips 20 which are positioned at intervals along the length of the strip and are advantageously produced integrally with the strip 18 during the moulding operation and from the same material.

The strip 18 carries the soft sealing profile 16. The profile 16 may be produced separately, such as by extrusion, and then adhesively secured to the strip 18. Instead, it can be produced simultaneously with the support.

In addition, the sealing arrangement 14 includes a soft seal strip 22, such as produced by moulding or extrusion from supple rubber. The seal strip 22 is of thin rectangular cross-section generally matching the cross-section of the support strip 18. The seal strip 20 is provided with through holes which are spaced apart to match the spacing of the clips 20, and the clips pass through these holes.

In accordance with a feature of the sealing arrangement, the flange 8 is provided with through holes 24 arranged at intervals around the door opening and with a pitch corresponding to the pitch of the clips 20. Figure 1 shows the flange 8 with the holes 24 arranged in it.

The sealing arrangement 14, comprising the rigid support strip 18 and the integrally moulded clips 20, and also including the soft seal strip 22 mounted thereon by means of its holes which engage the clips 20, is mounted in position by offering it up to the flange 8 in a single operation, as indicated in Figure 1. The clips 20 thus pass through the holes 24 and secure the sealing strip in position on the flange.

In this way, assembly of the sealing strip onto the vehicle body involves only a single operation. This contrasts with known arrangements in which (for example) sealing strips comprise a channel-shaped gripping section which has to be pushed embracingly over the flange and which supports a soft sealing section similar to the section 16 of Fig. 2. With such known arrangements, the channel-shaped gripping section has to be pressed onto the flange, such as by means of a mallet or possibly some other tool. This involves the application of force to the gripping section along substantially the whole of its length. This is a time-consuming process and may damage the gripping section. In addition, such a gripping section, being flexible and resilient, may not have an accurately controlled length. It may therefore have to be selected to be initially over-length (that is, longer than the periphery of the door opening), and then compressed lengthwise to fit it finally into place. Subsequently, it may shrink, providing a gap.

This disadvantage is avoided with the form of sealing strip shown in Figure 2. Its length is accurately controlled by use of the rigid support strip 18. The pitch of the clips 20 is known accurately, thus enabling corresponding holes 24 to be produced in the flange 8. The length of the sealing arrangement is thua unaffected by the fitting process and is selected initially so as to match the periphery of the door opening substantially exactly.

As shown in Figure 2, the sealing arrangement 14 advantageously also includes a so-called cosmetic lip 26. This extends along the length of the arrangement 14 and covers over the distal ends of the clips 20. It has a portion 28 which covers over the distal edge of the flange 8, a main body portion 30 which clips over the distal end of each of the clips 20, and a flap 32 which resiliently contacts the inner skin 12 of the bodywork.

Advantageously, the trimming fabric on the bodywork 12 can be gripped under the edge flap 32.

The cosmetic lip 26 can be produced separately by means of a moulding or extrusion operation and held in position by resiliently gripping the distal ends of the clips 20. Instead, it can be produced integrally with the seal strip 22.

Figure 4 shows a cross-section corresponding to that of Figure 2 but through a modified form of the strip, and parts in Figure 4 corresponding to parts in Figure 2 are correspondingly referenced.

As before, the soft sealing section 16 is mounted on and attached to a substantially rigid support strip 18 produced by moulding or extrusion or other suitable process from plastics or rubber material for example. Again, the soft sealing section 16 can be adhesively secured to the support strip 18 or moulded or extruded integrally with it.

In the case of the Figure 4 arrangement, however, there are no clips 20.

In order to mount the sealing strip in position, a second longitudinally extending support strip 40 is provided, made of flexible material such as moulded or extruded plastics or rubber. The support strip 40 is secured to the flange 8 by means of adhesive. The cross-section of the support strip 40 generally matches that of the support strip 18, and both of them are sized width-wise and length-wise so as to match the shape and size of the flange 8 around its periphery.

As shown in Figure 4, the facing surfaces of the supports 18 and 40 are provided with continuous strips of contact fastener material 42 of the "Velcro" type, or other similar type operating on the same general principle, which thus engage each other, as shown in Figure 4, and secure the sealing firmly in position on the flange.

Thus, the sealing arrangement 14 can be manufactured to match the length of the flange 8 substantially exactly and secured in position by substantially a single operation, simply involving clipping the two lengths of "Velcro" together.

In the case of the Figure 4 arrangement, the cosmetic lip 26 is advantageously integral with the sealing section 16 and made of the same material or a different material.

## Claims

1. A sealing arrangement for sealing around the periphery of an opening (6) closable by a closure member, comprising a linearly extending support strip (18) which provides first and second oppositely directed faces, locking means (20, 42) on the support strip (18) co-operating with matching engaging means on the periphery of the opening (6) for securing the support strip (18) to the periphery of the opening (6) with the first face of the strip (18) directed towards the periphery of the opening (6), and a soft sealing profile mounted on the second face of the support strip (18) so as to be partially compressed by the closing closure member when the support strip (18) is secured to the periphery of the opening (6), characterised in that the support strip (18, 22, 40) is of predetermined and substantially invariable length which matches a predetermined length along the periphery of the opening (6) and is substantially rigid to enable fitting of the sealing arrangement in a single operation.

2. A sealing arrangement according to claim 1, characterised in that the locking means (20) comprises a plurality of projecting clips (20) extending substantially perpendicularly to the said first face of the support strip (18) and the engaging means (24) comprises holes at predetermined positions around the periphery of the opening (6).

3. A sealing arrangement according to claim 2, characterised by a generally flat soft seal (22) matching the length of the support strip (18) and mounted on the first face of the support strip (18) so as to be sealingly interposed between that face and the periphery of the opening (6).

4. A sealing arrangement according to any one of claims 1 to 3, characterised by a flexible covering lip (26) corresponding in length to the length of the support strip (18) and attached directly or indirectly to the support strip (18) so as to extend along the periphery of the opening (6) on the opposite side thereof to the support strip (18) when the support strip (18) is mounted on the periphery of the opening (6).

5. A sealing arrangement according to claim 1, characterised in that the locking means (20, 42) comprises a plurality of clips (20) projecting from the first face of the support strip (18) and positioned at predetermined intervals therealong and the engaging means (24) comprises a plurality of correspondingly positioned holes (24) in the periphery of the opening (6), the clips (20) extending through the holes (24) so that their distal ends protrude through the holes (24), and including a flexible covering lip (26) matching the length of the support strip (18) and adapted to be mounted on the opposite side of the periphery of the opening (6) to the support strip (18) and to cover over the protruding distal ends of the clips (20).

6. A sealing arrangement according to claim 5, characterised in that the covering lip (26) is adapted to engage the protruding distal ends of the clips (20).

7. A sealing arrangement according to claim 5 or 6, characterised in that the arrangement includes a generally flat soft seal (22) matching the length of the support strip (18) and mounted on the first face of the support strip (18) so as to be sealingly interposed between that face and the periphery of the opening (6).

8. A sealing arrangement according to any one of claims 2, 3 and 5 to 7, characterised in that the clips (20) are produced integrally with the support strip (18).

9. A sealing arrangement according to claim 1, characterised in that the locking means comprises continuous contact fastener means (42) carried by the first face and extending along the length thereof and the engaging means comprising corresponding continuous contact fastener means (42).

10. A sealing arrangement according to claim 9, characterised in that the contact fastening means (42) of the engaging means is mounted on a generally flat second support strip (40) which generally matches the length of the first-mentioned support strip (18) and which is adapted to be secured to the periphery of the opening (6).

11. A sealing arrangement according to claim 10, characterised in that the second support strip (40) is adapted to be secured to the periphery of the opening (6) by adhesive.

12. A sealing arrangement according to any one of claims 9 to 11, characterised by a flexible covering lip (26) embracing the periphery of the opening (6).

13. A sealing arrangement according to claim 12, in which the covering lip (26) is secured to the first-mentioned support strip (18).

14. A sealing arrangement according to any one of claims 9 to 13, characterised in that the opening (6) is an opening in a motor vehicle body and the periphery is at least partly defined by a flange (10, 12).

## Patentansprüche

1. Dichtungsanordnung zum Abdichten entlang dem Umfang einer durch ein Schließteil verschließbaren Öffnung (6), mit einer sich geradlinig erstreckenden Tragleiste (18), die mit einer ersten und einer gegenläufigen zweiten Fläche versehen ist, mit auf der Tragleiste (18) angeordneten Verriegelungsmitteln (20, 42), die mit auf dem Rand der Öffnung (6) angeordneten, entsprechenden Rastmitteln zusammenwirken, um die Tragleiste (18) an dem Rand der Öffnung (6) zu befestigen, wobei die erste Fläche der Leiste (18) zum Rand der Öffnung (6) hin gerichtet ist, und mit einem so auf der zweiten Fläche der Tragleiste (18) angeordneten weichen Dichtprofil, das dieses teilweise durch das sich schließende Schließteil zusammengedrückt wird, wenn die Tragleiste (18) auf dem Rand der Öffnung (6) befestigt ist,
**dadurch gekennzeichnet,**
daß die Tragleiste (18, 22, 40) eine vorbestimmte und im wesentlichen unveränderliche Länge aufweist, die einer vorbestimmten Lange entlang dem Rand der Öffnung (6) entspricht und im wesentlichen steif ist, um ein Befestigen der Dichtungsanordnung in einem einzigen Arbeitsschritt zu ermöglichen.

2. Dichtungsanordnung nach Anspruch 1, dadurch gekennzeichnet, daß das Verriegelungsmittel (20) eine Mehrzahl vorspringender Laschen aufweist, die sich im wesentlichen rechtwinklig zu der ersten Fläche der Tragleiste (18) erstrecken und das Rastmittel (24) an vorbestimmten Positionen entlang dem Rand der Öffnung (6) Löcher aufweist.

3. Dichtungsanordnung nach Anspruch 2, gekennzeichnet durch eine im allgemeinen ebene, weiche Dichtung (22), die der Länge der Tragleiste (18) entspricht und auf der ersten Fläche der Tragleiste (18) angeordnet ist, um abdichtend zwischen der Fläche und dem Rand der Öffnung (6) eingefügt zu sein.

4. Dichtungsanordnung nach einem der Ansprüche 1 bis 3, gekennzeichnet durch eine elastische Abdecklippe (26), die in der Länge der Länge der Tragleiste (18) entspricht und so direkt oder indirekt an der Tragleiste (18) angebracht ist, daß sie sich auf der zur Tragleiste (18) gegenüberliegenden Seite entlang dem Rand der Öffnung (6) erstreckt, wenn die Tragleiste (18) auf dem Rand der Öffnung (6) befestigt ist.

5. Dichtungsanordnung nach Anspruch 1, dadurch gekennzeichnet, daß das Verriegelungsmittel (20, 42) eine Mehrzahl Laschen (20) aufweist, die von der ersten Fläche der Tragleiste (18) vorspringen und entlang dieser in vorbestimmten Abständen positioniert sind, und das Rastmittel (24) eine Mehrzahl entsprechend positionierter Löcher (24) im Rand der Öffnung (6) aufweist, wobei sich die Laschen (20) so durch die Löcher (24) erstrecken, daß deren körperfernen Enden durch die Löcher (24) hervortreten, und mit einer elastischen Abdecklippe (26), die der Länge der Tragleiste (18) entspricht und dafür bestimmt ist, auf der zur Tragleiste (18) gegenüberliegenden Seite am Rand der Öffnung (6) befestigt zu werden und die hervortretenden körperfernen Enden der Laschen (20) zu überdecken.

6. Dichtungsanordnung nach Anspruch 5, dadurch gekennzeichnet, daß die Abdecklippe (26) dafür bestimmt ist, mit den körperfernen Enden der Laschen (20) in Eingriff zu stehen.

7. Dichtungsanordnung nach Anspruch 5 oder 6, dadurch gekennzeichnet, daß die Anordnung eine im allgemeinen ebene, weiche Abdichtung (22) umfaßt, die der Länge der Tragleiste (18) entspricht und auf der ersten Flache der Tragleiste (18) angeordnet ist, um abdichtend zwischen der Fläche und dem Rand der Öffnung (6) eingefügt zu sein.

8. Dichtungsanordnung nach einem der Ansprüche 2, 3 und 5 bis 7, dadurch gekennzeichnet, daß die Laschen (20) einstückig mit der Tragleiste (18) hergestellt werden.

9. Dichtungsanordnung nach Anspruch 1, dadurch gekennzeichnet, daß das Verriegelungsmittel fortlaufende Kontaktbefestigungsmittel (42) umfaßt, die von der ersten Fläche getragen sich entlang deren Länge erstrecken und die Rastmittel entsprechende fortlaufende Kontaktbefestigungsmittel (42) aufweisen.

10. Dichtungsanordnung nach Anspruch 9, dadurch gekennzeichnet, daß das Kontaktbefestigungsmittel (42) der Rastmittel auf einer im wesentlichen ebenen zweiten Tragleiste (40) befestigt ist, die im wesentlichen der Länge der erstgenannten Tragleiste (18) entspricht und die dafür bestimmt ist, am Rand der Öffnung (6) befestigt zu werden.

11. Dichtungsanordnung nach Anspruch 10, dadurch gekennzeichnet, daß die zweite Tragleiste (14) dafür bestimmt ist, mittels eines Klebstoffes am Rand der Öffnung (6) befestigt zu werden.

12. Dichtungsanordnung nach einem der Ansprüche 9 bis 11, gekennzeichnet durch eine elastische Abdecklippe (26), die den Rand der Öffnung (6) umfaßt.

13. Dichtungsanordnung nach Anspruch 12, bei der die Abdecklippe (26) an der erstgenannten Tragleiste (18) befestigt ist.

14. Dichtungsanordnung nach einem der Ansprüche 9 bis 13, dadurch gekennzeichnet, daß die Öffnung (6) eine Öffnung in einer Kraftfahrzeugkarosserie ist und der Rand zumindest teilweise durch einen Flansch (10, 12) gebildet ist.

## Revendications

1. Agencement d'étanchéité destiné à l'étanchement autour de la périphérie d'une ouverture (6) susceptible d'être refermée par un élément de fermeture, comprenant une bande de support (18) qui s'étend linéairement et qui présente une première et une seconde face dirigées en opposition, des moyens de blocage (à 20, 42) sur la bande de support (18) qui coopèrent avec des moyens d'engagement appariés sur la périphérie de l'ouverture (6) pour attacher la bande de support (18) sur la périphérie de l'ouverture (6), de manière que la première face de la bande (18) soit dirigée vers la périphérie de l'ouverture (6), et un profil d'étanchéité souple monté sur la seconde face de la bande de support (18) de manière à être partiellement comprimé par l'élément de fermeture lorsque la bande de support (18) est fixée sur la périphérie de l'ouverture (6), caractérisé en ce que la bande de support (18, 22, 45) a une longueur prédéterminée et sensiblement invariable qui s'accorde avec une longueur prédéterminée le long de la périphérie de l'ouverture (6), et en ce qu'elle est sensiblement rigide pour permettre le montage de l'agencement d'étanchéité dans une opération unique.

2. Agencement d'étanchéité selon la revendication 1, caractérisé en ce que les moyens de blocage (20) comprennent une pluralité de pinces (20) en projection, qui s'étendent sensiblement perpendiculairement par rapport à ladite première face de la bande de support (18), et en ce que les moyens d'engagement (24) comprennent des perçages à des positions prédéterminées autour de la périphérie de l'ouverture (6).

3. Agencement d'étanchéité selon la revendication 2, caractérisé par un joint souple et généralement plat (22) qui s'accorde avec la longueur de la bande de support (18) et qui est monté sur la première face de la bande de support (18) de manière à être interposé en étanchement entre cette face et la périphérie de l'ouverture (6).

4. Agencement d'étanchéité selon l'une quelconque des revendications 1 à 3, caractérisé par une lèvre de couverture flexible (26), qui correspond dans sa longueur à la longueur de la bande de support (18) et qui est attachée directement ou indirectement à la bande de support (18) de manière à s'étendre le long de la périphérie de l'ouverture (6) sur le côté opposé de celle-ci vers la bande de support (18) lorsque la bande de support (18) est montée sur la périphérie de l'ouverture (6).

5. Agencement d'étanchéité selon la revendication 1, caractérisé en ce que des moyens de blocage (20, 42) comprennent un pluralité de pinces (20) qui se projettent depuis la première face de la bande de support (18) et qui sont positionnées à des intervalles prédéterminés le long de celle-ci, et en ce que les moyens d'engagement (24) comprennent une pluralité de perçages (24) positionnés en correspondance dans la périphérie de l'ouverture (6), lesdites pinces (20) s'étendant à travers des perçages (24) de manière que leurs extrémités distales fassent saillie à travers les perçages (24), et incluant une lèvre de couverture flexible (26) accordée à la longueur de la bande de support (18) et adaptée à être montée sur le côté opposé de la périphérie de l'ouverture (6) sur la bande de support (18) et à recouvrir les extrémités distales en saillie des pinces (20).

6. Agencement d'étanchéité selon la revendication 5, caractérisé en ce que la lèvre de couverture (26) est adaptée à engager les extrémités distales en saillie des pinces (20).

7. Agencement d'étanchéité selon l'une ou l'autre des revendications 5 et 6, caractérisé en ce que l'agencement inclut un joint souple et généralement plat (22) accordé à la longueur de la bande de support (18) et monté sur la première face de la bande de support (18) de façon à être interposé en étanchement entre cette face et la périphérie de l'ouverture (6).

8. Agencement d'étanchéité selon l'une quelconque des revendications 2, 3 et 5 à 7, caractérisé en ce que les pinces (20) sont produites de manière intégrée avec la bande de support (18).

9. Agencement d'étanchéité selon la revendication 1, caractérisé en ce que les moyens de blocage comprennent des moyens de fixation par contact continus (42) portés par la première face et s'étendant le long de la longueur de celle-ci, et en ce que les moyens d'engagement comprennent des moyens de fixation par contact continus correspondants (42).

10. Agencement d'étanchéité selon la revendication 9, caractérisé en ce que les moyens de fixation par contact (42) des moyens d'engagement sont montés sur une seconde bande de support généralement plate (40) qui s'accorde généralement à la longueur de la première bande de support (18), et qui est adaptée à être fixée sur la périphérie de l'ouverture (6).

11. Agencement d'étanchéité selon la revendication 10, caractérisé en ce que la seconde bande de support (40) est adaptée à être fixée sur la périphérie de l'ouverture (6) au moyen d'un adhésif.

12. Agencement d'étanchéité selon l'une quelconque des revendications 9 à 11, caractérisé par une lèvre de couverture flexible (26) qui embrasse la périphérie de l'ouverture (6).

13. Agencement d'étanchéité selon la revendication 12, dans lequel la lèvre de couverture (26) est fixée sur la première bande de support précitée (18).

14. Agencement d'étanchéité selon l'une quelconque des revendications 9 à 13, caractérisé en ce que l'ouverture (6) est une ouverture dans une carrosserie d'un véhicule automobile, et en ce que la périphérie est au moins partiellement définie par une bride (10, 12).
